# EUROPEAN PATENT SPECIFICATION

(11) **EP 0 781 514 B1**
(45) Date of publication and mention of the grant of the patent: **02.05.2001**
(21) Application number: 95309496.8
(22) Date of filing: 28.12.1995
(51) Int. Cl.: A24C 5/32, B65G 51/02, B65G 51/28

(54) **Pneumatic bar conveying apparatus**
Pneumatisches Transportgerät für Stäbe
Appareil de transport pneumatique pour barres

(43) Date of publication of application: 02.07.1997
(73) Proprietor: Tokyo Automatic Machinery Works Limited, Chiyoda-ku, Tokyo 101 (JP)
(72) Inventor: Endo, Isao, Nagareyama-shi Chiba-ken (JP); Konishi, Kunihiro, Kitasohma-gum, Ibaraki-ken (JP)
(74) Representative: Denmark, James

(56) References cited:
- EP-A- 0 262 236
- EP-A- 0 635 220
- EP-A- 0 640 296
- US-A- 3 827 757

## Description

### BACKGROUND OF THE INVENTION

The present invention relates to a pneumatic bar conveying apparatus for supplying bar-like materials such as filter plugs and cigarettes to a receiving apparatus and, more particularly, to a pneumatic bar conveying apparatus in which a discharge drum is mounted for constant speed rotation below a bar-like material holding section and is provided with a plurality of tooth shape sections defining therebetween holding grooves in the outer periphery into which the bar-like materials are charged from the holding section and then are conveyed to the receiving apparatus from the holding grooves through a cylinder head to a conveying pipe line by an air pressure supplied from an air injection port into each holding groove that has rotated to a force-feed position.

A pneumatic bar conveying apparatus of this type has been disclosed in Japanese Patent Publication No. Sho 54-34233. In this apparatus, a discharge drum rotating at a constant speed is axially mounted between two vertical plates; and a compressed air injection port is provided in one of the vertical plates, and communicates with an air supply source, so that the injection port will register with each material holding groove as it rotates to a position causing the material to be force-fed; for example to a conveying pipe line such as a pipe or tube; by compressed air which is supplied to the discharge drum from the air injection port almost continuously into each holding groove The air supply is interrupted for an instant at a part of the air injection port when each tooth-shaped section passes the air injection port. By this means, the bar-like material is force-fed from the holding groove into the conveying pipe line and is reliably carried to the receiving apparatus under a specific discharge pressure required for carrying the material at the upstream end in the conveying pipe line.

However, in such a prior art pneumatic bar conveying apparatus, since the compressed air is supplied almost continuously into each holding groove with only partial interruption of air supply during the period from the completion of force-feeding one bar-like material into the conveying pipe line till the force-feeding of the following bar-like material, in fact there is little pressure difference in the compression pressure between the compressed air that is supplied from the air injection port into the holding groove and the compressed air that has moved to the upstream end in the conveying pipe line as the bar-like material is force fed. Under the conditions stated above, the compressed air flows at a slow rate from the holding groove into the conveying pipe line; and, according to tests conducted using a bar-like material which is about 20 to 30 percent longer than a conventional bar-like material, increasing the discharge pressure of the compressed air supplied at the air injection port raises the compressed air pressure on the outlet side at the upstream end in the conveying pipe line. The pressure difference between these compressed air pressures, however, will not increase so much, and therefore the long bar-like material will clog in either the cylinder head or the conveying pipe line. It has been found necessary, to avoid the said clogging in the known apparatus, to lower the rotational speed of the discharge drum by about 60 percent, resulting in a decreased speed of the bar-like material and accordingly an excessive lowering of the apparatus capacity.

Furthermore, since the compressed air is applied to a port which the end portion of each tooth-shaped section passes, there occurs compressed air turbulence, thus tending to bend the bar-like material into contact with the inner surface of the holding groove and the cylinder head, resulting in contact resistance which lowers the conveying speed of the bar-like material. Furthermore, since the compressed air is supplied simultaneously to two holding grooves on the respective sides of each tooth-shaped section, the timing of the force-feeding of bar-like materials in respective holding grooves will be irregular.

It is a first object of the present invention to provide a pneumatic bar conveying apparatus for force-feeding bar-like materials from the inside of holding grooves into a conveying pipe line rapidly and without clogging.

It is a second object of the present invention to provide a pneumatic bar conveying apparatus capable of starting force-feeding of respective bar-like materials at regular intervals while preventing the occurrence of compressed air turbulence in a direction tending to bend the bar-like material.

### SUMMARY OF THE INVENTION

To accomplish the first object, the present invention features the provision in a pneumatic bar conveying apparatus, of an intermittent air supply means for intermittently supplying compressed air from an air injection port to the holding grooves in synchronism with the sequential arrival of the holding grooves to the force-feed position, and wherein the air is interrupted longer than the period during which the air supply would be shut off by the passage of one of the tooth-shaped sections protrusively defining the holding grooves, to thereby provide a specific discharge pressure in the conveying pipe line necessary for carrying the bar-like material to a receiving apparatus while the air supply is shut off by the intermittent air supply means.

Furthermore, the intermittent air supply means may comprise an intermittent operation valve in a passage extending from the air injection port to an air supply source said valve being arranged to operate in synchronism with the rotational speed of the discharge drum.

In the above apparatus, after being supplied for a specific period of time into each holding groove, the compressed air will be interrupted, thus lowering the outlet pressure of the compressed air remaining in the holding groove and the conveying pipe line. When the pressure of the compressed air from the air injection port increases by opening of the valve to supply the compresses air, a specific discharge pressure required to carry the bar-like material to the receiving apparatus is provided, and the pressure difference between the inlet pressure of the compressed air supplied from the air injection port to the holding groove and the conveying pipe line, thereby raising the flow velocity of the compressed air from the holding groove into the conveying pipe line to provide a higher initial speed of travel of the bar-like material within the holding groove.

Thus, in the pneumatic bar conveying apparatus of the present invention, bar-like materials can be force-fed without clogging from the holding grooves into the conveying pipe line. Therefore, as compared with the prior art apparatus in which the compressed air is supplied continuously into each holding groove simply and the only shutting off the air supply is by the passage of the tooth like sections, the pneumatic bar conveying apparatus of the present invention has a greater carrying capacity at an increased rotational speed of the discharge drum and the bar-like material, even if long, can be conveyed reliably without decreasing the rotational speed of the discharge drum or, accordingly, the carrying capacity of the pneumatic bar conveying apparatus.

The pneumatic bar conveying apparatus of the present invention may comprise a partition wall for shutting off the compressed air supplied from the air injection port into the holding groove, and in this partition wall is provided spaced communicating holes of smaller diameter than, the bar-like material in each holding groove, the spacing between the holes being sufficient to effect said interruption of the air flow.

In such pneumatic bar conveying apparatus, air supply to the end position in the holding grooves is shut off by the partition wall, until one of said holes registers with the air supply, whereby the compressed air is supplied successively to only one holding groove, which produces a laminar flow of the compressed air flowing only in the same direction as the axis of the bar-like material.

Thus it is possible to force-feed the bar-like material at regular intervals, while preventing occurrence of turbulence of the compressed air in the holding grooves, which can cause bending of the bar-like material. Also, contacting of the bar-like material against the inner surface of the holding groove and the cylinder head can be avoided, which leads to avoidance of decreasing the speed of movement of the bar-like material as compared with the prior art apparatus, whereby it is possible to carry the bar-like materials successively and smoothly at regular time intervals.

The above and other objects, features and advantages of the present invention will become more apparent from the folldwing description with reference to the accompanying drawings.

### BRIEF DESCRIPTION OF THE DRAWINGS

Fig. 1 is an end view in longitudinal section showing an embodiment of a pneumatic bar conveying apparatus according to the present invention;
Fig. 2 is a reduced side view in longitudinal section taken along line II-II of Fig. 1;
Fig. 3 is a reduced side view in longitudinal section showing another embodiment of the pneumatic bar conveying apparatus according to the present invention;
Fig. 4 is a reduced side view in longitudinal section showing still another embodiment of the pneumatic bar conveying apparatus according to the present invention; and
Fig. 5 is a reduced side view in longitudinal section showing still another embodiment of the pneumatic bar conveying apparatus according to the present invention.

### DETAILED DESCRIPTION OF THE PREFERRED EMBODIMENTS

Hereinafter each preferred embodiment of a pneumatic conveying apparatus for conveying bar-like materials according to the present invention will be described with reference to the accompanying drawings.

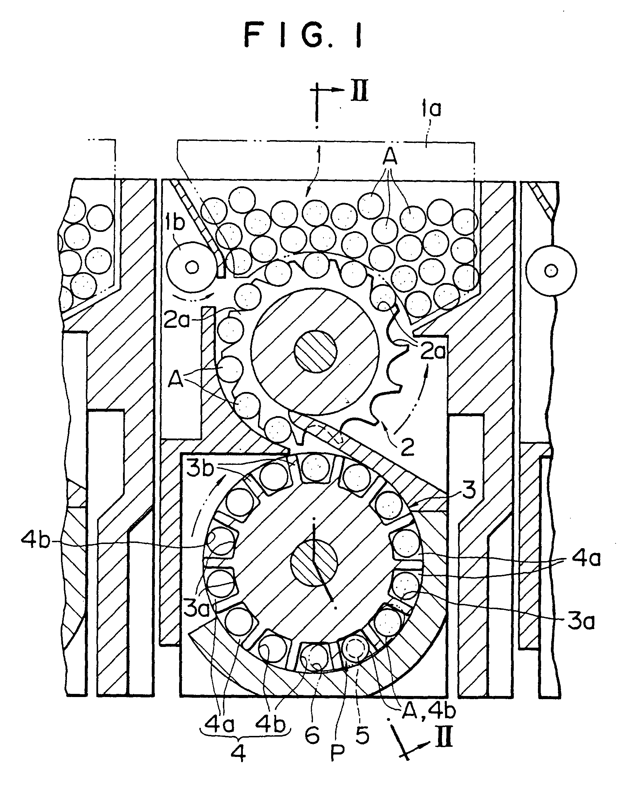

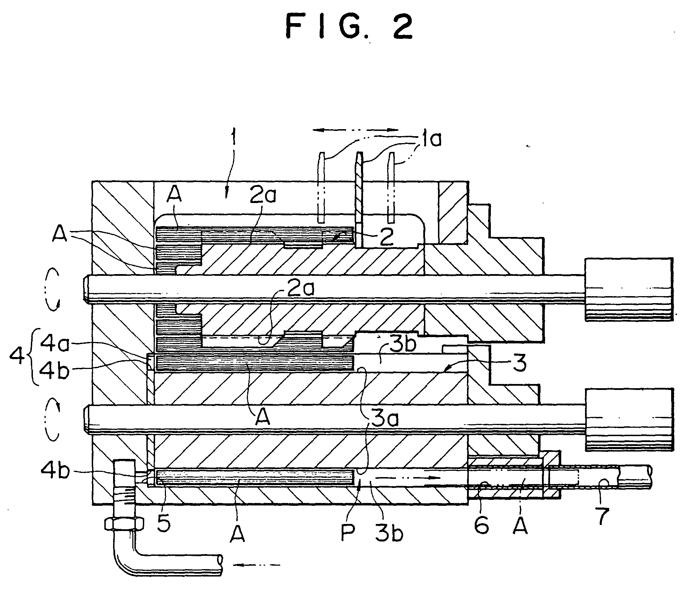

In the embodiment shown in Figs. 1 and 2, the bar-like material is a filter plug. A and a plurality of these plugs are contained in a holding section 1, such as a hopper, of the apparatus. Beneath the holding section 1 is a receiving roller 2 which is mounted for rotation as indicated by the arrow.

The bar-like materials A freely drop from the holding section 1 and are received individually in concave grooves 2a provided in the outer periphery of the receiving roller 2. The receiving roller 2 is adapted to rotate at constant speed and delivers the individual bar-like materials individually to holding grooves 3a defined by protruding tooth like sections 3b of a discharge drum 3 which is disposed below the receiving roller 2. Thereafter the discharge drum 3, which rotates as indicated by the arrow at a constant speed but in the opposite direction to the receiving roller 2, successively moves the individual bar-like materials A in the respective holding grooves 3a to the a force-feed position P.

The apparatus is provided with an intermittent air supply means 4 for supplying compressed air through an air inlet port 5 to each holding groove when in the force-feed position for discharging the bar-like material in the holding groove 3a through a cylinder head and into a conveying pipe line 7. The air supply is interrupted for a longer period than would be the case if the air shut-off period for shutting off the air supply were provided simply by the passage of a tooth-shaped section 3b past the port 5.

The intermittent air supply means 4 of the present embodiment includes a partition wall 4a.

In the partition wall 4a are provided the same number of communicating holes 4b as there are holding grooves 3a. The communicating holes 4b are of much the same diameter as, or smaller diameter than, that of the bar-like material A, and are disposed to register respectively with the bar-like materials A in the holding grooves 3a, and more particularly, register with the center of the sectional form of the holding grooves 3a.

For example, the diameter of the communicating holes 4b is about 6 to 8 mm when the diameter of the filter plug which is the bar-like material A is about 8 mm; and furthermore the spacing of the adjacent communicating holes 4a is larger than the inside diameter of the air injection port 5 as illustrated, so that even when the partition wall 4a stops rotating in any position, for example in case of an emergency stop of the apparatus, the compressed air will flow from the inside of the holding groove 3a into the cylinder head 6 and the conveying pipe line 7 to thereby effect the carrying of the bar-like material A to a receiving apparatus (not shown), if the air injection port 5 and the communicating hole 4b are at least partly connected.

In the above-described force-feed position P is provided the air injection port 5, which is open to communicate with the air supply source (not shown), and which aligns with the holding groove 3 that has rotated at a constant speed to the force-feed position P. In this position the air injection port 5, cylinder head 6, and conveying pipe line 7 are aligned with each other and with the holding groove 3a.

The air supply source comprises a compressor which supplies to the air injection port 5, compressed air which has been adjusted to a predetermined discharge pressure. The discharge pressure is adjusted to a minimum pressure necessary for carrying the bar-like material A from the air injection port 5 into the conveying pipe line 7, or more particularly, to the not shown receiving apparatus.

The cylinder head 6 is of such a design that the inner surface of its end facing the discharge drum 3 is formed in the shape of an elongated hole extending along the direction of rotation of the holding grooves 3a and it gradually contracts as it goes towards the other end to which the upstream end of the conveying pipe line 7 is connected. The downstream end of the conveying pipe line 7 is connected to the receiving apparatus.

In figure 1, reference numeral la denotes an adjusting plate which partitions a space inside the holding section 1 according to the length of the bar-like material, and reference numeral 1b denotes a raising roller.

Operation of the pneumatic bar conveying apparatus will now be explained.

The discharge drum 3 rotates at constant speed and the bar-like materials A in the holding grooves 3a are successively carried to the force-feed position P. No compressed air is supplied into the holding groove 3a so long as the air injection port 5 is closed by the parts of the partition wall 4a between the holes 4b of the intermittent air supply means 4. As each hole 4b communicates with the communicating hole 5 to communicate at least partially with the air injection port 5, the supply of the compressed air starts to be supplies against the bar-like material A in the holding groove 3a.

The air shut-off period, caused by the partition wall 4a, between consecutive holes 4b arriving at the injection port 5, as mentioned above is much longer than would be the case where the air cut off is caused by the passing of only a tooth-shaped section 3b, and the compressed air is supplied from the communicating hole 4b into only one holding groove 3a. The compressed air supplied into each holding groove 3a flows in laminar air flow in the direction as the axis of the bar-like material A held in the holding groove 3a, and therefore there will be no force acting to bend the bar-like material A in a direction intersecting with the force-feed direction of the bar-like material A. The bar-like materials A, therefore, are force-fed by this air pressure into the cylinder head 6 at regular intervals.

When each communicating hole 4b passes beyond the air injection port 5, the compressed air supply into the holding groove 3a is interrupted by the partition wall 4a, thereby decreasing the outlet pressure of the compressed air in the holding groove 3a, the cylinder head 6 and conveying pipe line 7 and consequently for the next holding groove 3a, increasing the pressure difference between the inlet pressure of the compressed air supplied from the air injection port 5 and the said next holding groove 3a.

This pressure difference, as each groove arrives at the force-feed position, therefore, will increase the flow velocity of the compressed air flowing from inside the holding groove 3a into the conveying pipe line 7, thus giving a great initial speed to the bar-like material A, the end portion of which is quickly force-fed into the cylinder head 6.

At this time, since the pressure in the upstream end in the conveying pipe line 7 is low, the bar-like material A moves to the receiving apparatus through the inside of the conveying pipe line 7 in an effective manner.

From tests conducted, compared to the prior art apparatus, pneumatic bar conveying apparatus according to the invention provided an increase in the rate of delivery of 150 mm long filter plugs to 2000 per minute.

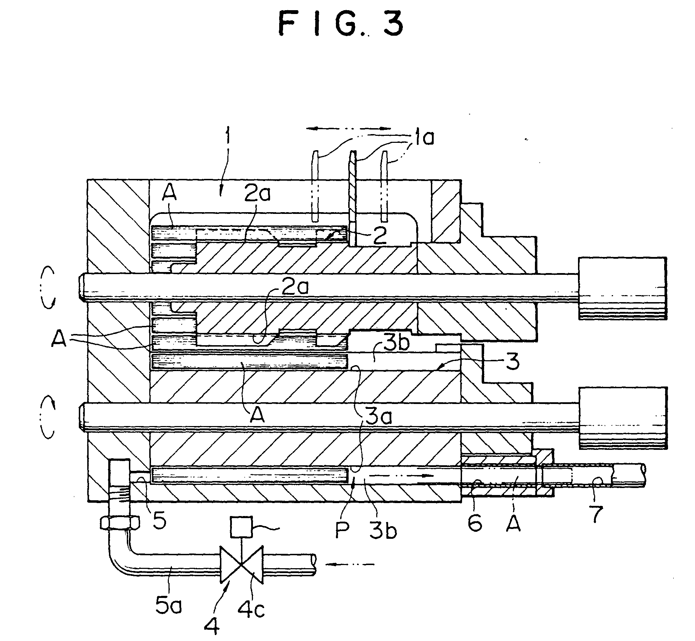

Figs. 3 to 5 show other embodiments of the pneumatic bar conveying apparatus according to the present invention.

Fig. 3 shows a pneumatic bar conveying apparatus which is similar to that shown in Figs. 1 and 2, except that the intermittent air supply means 4 is not provided with the partition wall 4a and the communicating holes 4b, but comprises an intermittent operation valve 4c which is inserted in a passage defined by a pipe 5a connected between the air injection port 5 and an air supply source (not shown). This valve operates in synchronism with the rotational speed of the discharge drum 3. The remainder of the apparatus is basically the same as the embodiment shown in Figs. 1 and 2.

The valve 4c comprises, for example, an electromagnetic valve. In operation, the discharge drum 3 by its rotation, produces an electrical signal. By this electrical signal, the valve is controlled to effect the intermittent supply of the compressed air from the air injection port 5 towards the bar-like material A in each holding groove 3a. As in the Figs 1 and 2 embodiment, each period during which the air is interrupted is longer than that which would result by simply the passing of one of the tooth-shaped sections 3b past the port 5.

The embodiment shown in Fig. 3 provides the same operation effect as that shown in Figs. 1 and 2.

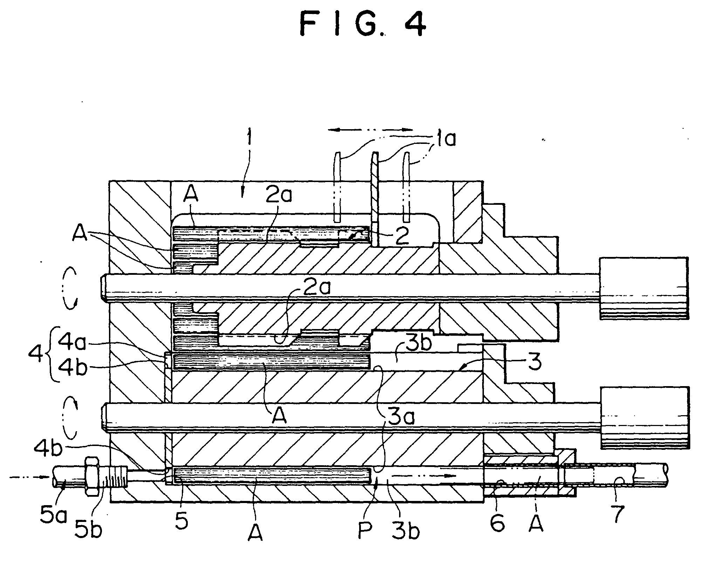

In the embodiment of Fig. 4, the partition wall 4a is again used, but the end portion 5b of the passage 5a for supplying the compressed air from the air supply source to the air injection port 5 is disposed in line with the holding groove 3a which is in the force-feed position P. Thus, the compressed air fed from the air supply source flows linearly, into the holding groove 3 in the force-feed position P. This apparatus operates otherwise in the same manner as the embodiment shown in Figs. 1 and 2.

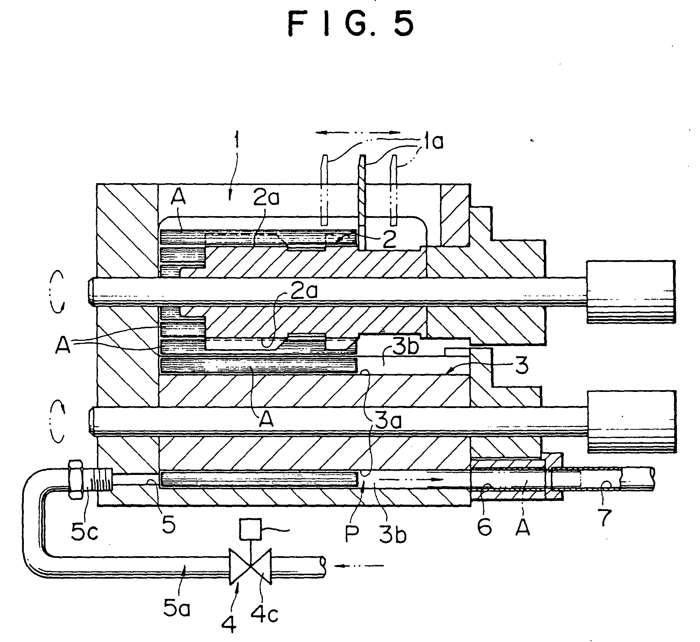

In the apparatus of Fig. 5, a passage 5a with the control valve 4c is provided and the end portion 5c of the passage 5a for supplying the compressed air from the air supply source to the air injection port 5 is disposed in line with the holding groove 3a in the force-feed position P, and also in line with the axis of the bar-like material A held in that holding groove 3a. Thus the compressed air that has been supplied from the air supply source, and adjusted to a predetermined discharge pressure, becomes a linear air flow coinciding with the axis of the bar-like material A held in the holding groove 3a in the force-feed position P. The operation of the apparatus of Fig. 5 is otherwise the same as the embodiment shown in Fig. 3.

In the apparatus shown in Figs. 4 and 5, therefore, laminar flow of compressed air in the groove in the force feed position P is more likely to occur, as compared with the embodiments shown in Figs. 1, 2 and 3, making it less likely that compressed air turbulence will occur in the groove 3a.

In each of the embodiments described above, a filter plug was used as the bar-like material A. It should be noted, however, that the present invention is not limited thereto and is applicable to cigarettes.

Also, it should be noted that the present invention is not limited to the examples given for the holding section 1 and the discharge drum 3, which may be arranged as disclosed in Japanese Patent Publication No. Sho 54-34233, and furthermore the construction of the intermittent air supply means 4 is not limited to the aforesaid construction, and modifications are possible as long as they have a similar function. Having described specific preferred embodiments of the invention with reference to the accompanying drawings, it will be appreciated that the present invention is not limited to those precise embodiments, and that various changes and modifications can be effected therein by one of ordinary skill in the art without departing from the scope and spirit of the invention as defined by the appended claims.

## Claims

1. A pneumatic bar conveying apparatus comprising a holding section (1) for holding a plurality of bar-like materials, such as filter plugs for cigarettes, and a discharge drum (3) rotatably mounted beneath the holding section (1) for holding the bar-like materials (A) fed in from said holding section (1) respectively in a plurality of peripheral concave holding grooves (3a) defined in said drum (3) between tooth shaped sections (3b) which protrude from the drum (3), and wherein said bar-like materials (A) are carried from said holding grooves (3a) to a receiving apparatus via a conveying pipe line (7) by means of compressed air supplied from an air injection port (5) to each holding groove as it moves by the rotation of the drum (3) to a force-feed position (P), said pneumatic bar conveying apparatus being characterised by an intermittent air supply means (4) provided for intermittent supply of the compressed air from said air injection port (5) to said bar-like material (A) in each of said holding grooves (3a) which interrupts the air supply for a longer period than that which would take place simply by one of the tooth-shaped sections (3b) passing over the air injection port.

2. A pneumatic bar conveying apparatus according to Claim 1, wherein said intermittent air supply means (4) comprises a partition wall (4a) connected to the side of said discharge drum (3) where the air injection port (5) is located, for shutting off intermittently the compressed air to be supplied from said air injection port (5); said partition wall (4a) being provided with the same number of communicating holes (4b) as there are grooves (3a) and which communication holes which have much the same diameter as, or smaller diameter, than said bar-like materials (A).

3. A pneumatic bar conveying apparatus according to Claim 2, wherein said communicating holes (4b) are arranged centrally of the cross sections of said holding grooves (3a).

4. A pneumatic bar conveying apparatus according to Claim 1, wherein said intermittent air supply means (4) is a valve (4c) in a supply passage for the compressed air, which (4c) is adapted to operate intermittently and in synchronism with the rotational speed of said discharge drum (3).

5. A pneumatic bar conveying apparatus according to Claim 1, wherein said air injection port (5) is arranged so that said air injection port (5), and said conveying pipe line (7) are in line with the holding groove (3a) in said force-feed position (P).

6. A pneumatic bar conveying apparatus according to any preceding claim, wherein the apparatus includes a cylinder head (6) having a bore connecting the conveying pipe line (7) to the holding groove (3a) in the force-feed position, the end of said cylinder head bore adjacent the discharge drum (3) being elongated along the direction of rotation of the drum (3) and gradually reducing towards the other end to which the upstream end of said conveying pipe line (7) is connected.

## Patentansprüche

1. Pneumatische Stabtransportvorrichtung, umfassend eine Haltesektion (1) für die Aufnahme einer Mehrzahl stabartiger Materialien, wie z.B. Filterstopfen für Zigaretten, und eine Abgabetrommel (3), die drehbar unterhalb der Haltesektion (1) montiert ist, um stabartige Materialien (A), die von der genannten Haltesektion (1) zugeführt werden, jeweils in einer Mehrzahl von peripheren konkaven Halterillen (3a) aufzunehmen, die in der genannten Trommel (3) zwischen zahnförmigen Sektionen (3b) definiert sind, die von der Trommel (3) vorstehen, und wobei die genannten stabartigen Materialien (A) von den genannten Halterillen (3a) zu einer Aufnahmevorrichtung über eine Transportrohrleitung (7) mit Hilfe von Druckluft befördert werden, die von einer Luftinjektionsmündung (5) zu jeder Halterille geführt wird, während sich diese durch die Drehung der Trommel (3) in eine Zwangszufuhrposition (P) bewegen, wobei die genannte pneumatische Stabtransportvorrichtung durch ein intermittierendes Luftzufuhrmittel (4) gekennzeichnet ist, dass für eine diskontinuierliche Zufuhr der Druckluft von der genannten Luftinjektionsmündung (5) zu dem genannten stabartigen Material (A) in den jeweiligen genannten Halterillen (3a) vorgesehen ist und die Luftzufuhr für eine Zeit unterbricht, die länger ist als die, die sich aus einer einfachen Passage von einer der zahnförmigen Sektionen (3b) über die Luftinjektionsmündung ergeben würde.

2. Pneumatische Stabtransportvorrichtung nach Anspruch 1, bei der das genannte intermittierende Luftzufuhrmittel (4) eine Trennwand (4a) umfasst, die an der Seite der genannten Abgabetrommel (3) angeschlossen ist, wo sich die Luftinjektionsmündung (5) befindet, um die Druckluftzufuhr von der genannten Luftinjektionsmündung (5) diskontinuierlich abzusperren; wobei die genannte Trennwand (4a) die gleiche Zahl von Verbindungslöchern (4b) wie von Rillen (3a) aufweist, wobei die Verbindungslöcher fast den gleichen Durchmesser wie die genannten stabartigen Materialien (A) oder einen kleineren Durchmesser haben.

3. Pneumatische Stabtransportvorrichtung nach Anspruch 2, bei der die genannten Verbindungslöcher (4b) auf den Mittelpunkt des Querschnitts der genannten Halterillen (3a) ausgerichtet sind.

4. Pneumatische Stabtransportvorrichtung nach Anspruch 1, bei der das genannte intermittierende Luftzufuhrmittel (4) ein Ventil (4c) in einem Zufuhrdurchgang für die Druckluft ist, das (4c) die Aufgabe hat, diskontinuierlich und synchron mit der Umdrehungsgeschwindigkeit der genannten Abgabetrommel (3) zu arbeiten.

5. Pneumatische Stabtransportvorrichtung nach Anspruch 1, bei der die genannte Luftinjektionsmündung (5) so angeordnet ist, dass die genannte Luftinjektionsmündung (5) und die genannte Transportrohrleitung (7) in einer Reihe mit der in der genannten Zwangszufuhrposition (P) befindlichen Halterille (3a) sind.

6. Pneumatische Stabtransportvorrichtung nach einem der vorherigen Ansprüche, wobei die Vorrichtung einen Zylinderkopf (6) mit einer Bohrung beinhaltet, der die Transportrohrleitung (7) mit der in der Zwangszufuhrposition befindlichen Halterille (3a) verbindet, wobei die genannte Zylinderkopfbohrung am Ende neben der Abgabetrommel (3) in Rotationsrichtung der Trommel (3) langgestreckt ist und sich in Richtung auf das andere Ende, an das das vorgeschaltete Ende der genannten Transportrohrleitung (7) anschließt, allmählich verengt.

## Revendications

1. Appareil de transport pneumatique pour barres comprenant une section de retenue (1) pour retenir une pluralité de matériaux en forme de barres, par exemple des bouts-filtres de cigarettes, et un tambour de décharge (3) monté de façon rotative sous la section de retenue (1) destinée à retenir les matériaux en forme de barres (A) alimentés à partir de ladite section de retenue (1) pour passer respectivement dans une pluralité de rainures de retenue concaves périphériques (3a) définies dans ledit tambour (3) entre les sections en forme de dent (3b) qui dépassent du tambour (3) et dans lequel les matériaux en forme de barres (A) sont acheminés depuis lesdites rainures de retenue (3a) vers un appareil de réception par l'intermédiaire d'une tubulure d'acheminement (7) faisant intervenir de l'air comprimé fourni à partir d'un orifice d'injection d'air (5) vers chacune des rainures de retenue, au fier et à mesure qu'elle est déplacée sous l'effet de la rotation du tambour (3) jusqu'à une position d'alimentation forcée (P), ledit appareil de transport pneumatique pour barres étant caractérisé par un moyen d'alimentation d'air intermittent (4) prévu pour assurer l'alimentation intermittente de l'air comprimé depuis ledit orifice d'injection d'air (5) vers ledit matériau en forme de barres (A) dans chacune des rainures de retenue (3a) qui interrompt l'alimentation d'air pendant un intervalle de temps plus long que celui qui se produirait simplement si l'une des sections en forme de dent (3b) passait au-dessus de cet orifice d'injection d'air.

2. Appareil de transport pneumatique pour barres, selon la revendication 1, dans lequel ledit moyen d'alimentation d'air intermittent (4) comprend une paroi de séparation (4a) reliée à la face latérale dudit tambour de décharge (3) où se trouve l'orifice d'injection d'air (5), afin d'interrompre de façon intermittente l'air comprimé destiné à être fourni à partir dudit orifice d'injection d'air (5) ; ladite paroi de séparation (4a) étant munie du même nombre de trous communicants (4b) qu'il existe de rainures (3a), et lesquels trous ceommunicants possédant le même diamètre, ou un diamètre plus petit, que lesdits matériaux en barres (A).

3. Appareil de transport pneumatique pour barres, selon la revendication 2, dans lequel lesdits trous communicants (4b) sont agencés au centre des sections transversales desdites rainures de retenue (3a).

4. Appareil de transport pneumatique pour barres, selon la revendication 1, dans lequel ledit moyen d'alimentation d'air intermittent (4) est une soupape (4c) positionnée dans un passage d'alimentation pour l'air comprimé, laquelle (4c) est adaptée pour fonctionner de façon intermittente et en synchronisation avec la vitesse de rotation dudit tambour de décharge (3).

5. Appareil de transport pneumatique pour barres, selon la revendication 1, dans lequel ledit orifice d'injection d'air (5) est agencé de manière à ce que ledit orifice d'injection d'air (5), et ladite tubulure d'acheminement (7) sont alignés avec ladite rainure de retenue (3a) dans ladite position d'alimentation forcée (P).

6. Appareil de transport pneumatique pour barres, selon l'une quelconque des revendications précédentes, dans lequel l'appareil comporte une culasse (6) ayant un alésage qui connecte la tubulure d'acheminement (7) à la rainure de retenue (3a) dans la position d'alimentation forcée, l'extrémité dudit alésage de cylindre, adjacente au tambour de décharge (3) étant allongée le long du sens de rotation du tambour (3) et se réduisant progressivement vers l'autre extrémité sur laquelle l'extrémité amont de ladite tubulure d'acheminement (7) est connectée.
